(19) Europäisches Patentamt
European Patent Office
Office européen des brevets

(11) **EP 2 461 531 A1**

(12) **EUROPEAN PATENT APPLICATION**
published in accordance with Art. 153(4) EPC

(43) Date of publication:
06.06.2012 Bulletin 2012/23

(51) Int Cl.:
*H04L 27/00* (2006.01)  *H04B 10/12* (2006.01)

(21) Application number: 10816662.0

(22) Date of filing: 27.08.2010

(86) International application number:
PCT/CN2010/076432

(87) International publication number:
WO 2011/032458 (24.03.2011 Gazette 2011/12)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 16.09.2009 CN 200910190319

(71) Applicant: Huawei Technologies Co., Ltd.
Shenzhen, Guangdong 518129 (CN)

(72) Inventor: DONG, Limin
Shenzhen
Guangdong 518129 (CN)

(74) Representative: Körber, Martin Hans
Mitscherlich & Partner
Sonnenstraße 33
80331 München (DE)

(54) **METHOD FOR GENERATING MODULATED SIGNALS AND TRANSMISSION DEVICE THEREOF**

(57) In the field of communications, a method for generating a modulated signal and a transmission device are disclosed. The method for generating a modulated signal includes: generating first monochromatic light and second monochromatic light between which a frequency difference exists; modulating the first monochromatic light and the second monochromatic light respectively to obtain a first modulated optical signal and a second modulated optical signal; superimposing the first modulated optical signal and the second modulated optical signal to obtain a hybrid optical signal; and performing photoelectric conversion on the hybrid optical signal to obtain a modulated signal. In the process of generating a modulated signal, no digital intermediate frequency modulation is required, and all processing before the photoelectric conversion is performed on the optical domain. The optical signal obtained through processing is transmitted through optical waveguide (such as optical fibers), which prevents intermediate frequency cables from restricting high-speed transmission of the transmission device.

EP 2 461 531 A1

Generate first monochromatic light and second monochromatic light between which a frequency difference exists — S1

Modulate the first monochromatic light and the second monochromatic light respectively to obtain a first modulated optical signal and a second modulated optical signal — S2

Superimpose the first modulated optical signal and the second modulated optical signal to obtain a hybrid optical signal — S3

Perform photoelectric conversion on the hybrid optical signal to obtain a modulated signal — S4

FIG. 2

**Description**

This application claims priority to Chinese Patent Application No. 200910190319.4, filed with the Chinese Patent Office on September 16, 2009 and entitled "METHOD FOR GENERATING A MODULATED SIGNAL, AND TRANSMISSION DEVICE", which is hereby incorporated by reference in its entirety.

**FIELD OF THE INVENTION**

The present invention relates to the field of communications, and in particular, to a method for generating a modulated signal and a transmission device.

**BACKGROUND OF THE INVENTION**

As a traditional communication mode, microwaves have played an important role in the communication field. The inherent merits of microwaves are simple deployment, low cost, and long transmission distance. With the continuous development of a communication network, microwaves are still applied widely, especially for backhaul of mobile base stations. In remote areas with complicated terrain, microwaves are prevailing by virtue of its own strengths. With the increase of the transmission data traffic, the transmission microwave band is more and more crowded. To increase the transmission bandwidth of microwaves, a new spectrum band 71-76 GHZ/81-86 GHZ, which is referred to as E-BAND, is used in the industry. The available bandwidth of this band is up to 10 GHZ, and can meet the requirements of transmitting high-speed service data (such as Gigabit Ethernet GE/10*Gigabit Ethernet 10GE). Currently, such high-speed services are implemented through a digital intermediate frequency modulation technology. Meanwhile, a millimeter wave communication technology is under development in the industry. Millimeter waves have inherent merits of wide bandwidth and wireless transmission, and have a good prospect of application. The E-BAND band is close to the millimeter band. Some technologies of the millimeter wave may improve the implementation of the modulation technology of the E-BAND band, and in particular, simplify the implementation of high-speed modulation.

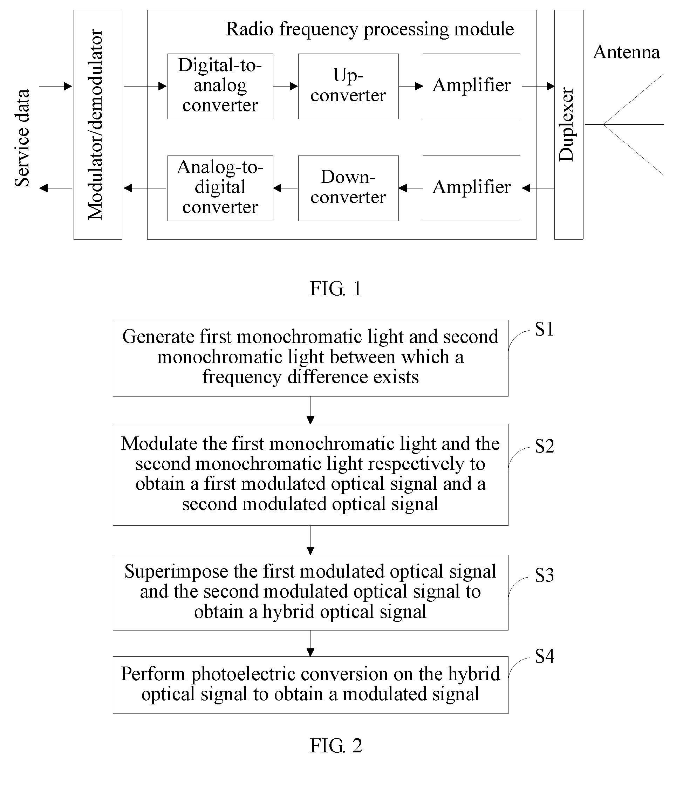

As shown in FIG. 1, a microwave transmission device is provided in the prior art, including an IDU (In Door Unit, in door unit), an ODU (Out Door Unit, out door unit), and an antenna. Connection of signals is performed by an intermediate frequency cable between the IDU and the ODU, where the IDU includes a digital intermediate frequency modulator/demodulator Modem, and the ODU includes a radio frequency processing module. In an uplink direction, the digital intermediate frequency modulator/demodulator Modem modulates service data onto an intermediate frequency carrier to form a digital intermediate frequency modulated signal. A digital-to-analog converter DAC in the radio frequency processing module converts the digital intermediate frequency modulated signal into an analog intermediate frequency modulated signal. Through up-conversion, the analog intermediate frequency modulated signal is loaded onto a microwave carrier to form a microwave modulated signal. The microwave modulated signal is emitted by the antenna after undergoing power amplification of an amplifier. In a downlink direction, the antenna receives the microwave modulated signal sent by a microwave transmission device at the opposite side. In a duplexer, the received microwave modulated signal is separated from a sent microwave modulated signal. After being amplified by the amplifier, the received microwave modulated signal is converted into an analog intermediate frequency modulated signal through down-conversion. An analog-to-digital converter ADC in the radio frequency processing module samples the analog intermediate frequency modulated signal obtained through down-conversion, and converts the analog intermediate frequency modulated signal into a digital intermediate frequency modulated signal. Afterward, a digital intermediate frequency Modem demodulates the digital intermediate frequency modulated signal obtained by the analog-to-digital converter, and obtains the service data transmitted by the opposite side.

Intermediate frequency cables attenuate high-speed signals drastically. When transmitting high-speed service data such as GE/10GE, the intermediate frequency Modem generates a high-speed digital intermediate frequency modulated signal. Limited by the attenuation characteristics of the intermediate frequency cables, the existing microwave transmission device restricts the distance between the IDU and the ODU, which restricts the application of the existing microwave transmission device. It is known to persons skilled in the art that, in other communication fields, if modes similar to the two-step processing mode, namely, "intermediate frequency modulation" and "up-conversion", of the microwaves are used to implement high-speed service data transmission, same problems as those of the microwave exist.

**SUMMARY OF THE INVENTION**

A method for generating a modulated signal provided in an embodiment of the present invention includes:

generating first monochromatic light and second monochromatic light between which a frequency difference exists;
modulating the first monochromatic light and the second monochromatic light respectively to obtain a first modulated optical signal and a second modulated optical signal;
superimposing the first modulated optical signal and the second modulated optical signal to obtain a hybrid optical signal; and
performing photoelectric conversion on the hybrid optical signal to obtain a modulated signal.

A transmission device provided in an embodiment of the present invention includes:

a light source, configured to generate first monochromatic light and second monochromatic light between which a frequency difference exists;
a first modulating module, configured to modulate the first monochromatic light to obtain a first modulated optical signal;
a second modulating module, configured to modulate the second monochromatic light to obtain a second modulated optical signal;
a coupler, configured to superimpose the first modulated optical signal and the second modulated optical signal to obtain a hybrid optical signal; and
a photodetector, configured to perform photoelectric conversion on the hybrid optical signal to obtain a modulated signal.

In embodiments of the present invention, two pieces of monochromatic light, between which a frequency difference exists, are modulated to obtain a first modulated optical signal and a second modulated optical signal; the first modulated optical signal and the second modulated optical signal are superimposed to obtain a hybrid optical signal, and then the photoelectric conversion is performed on the hybrid optical signal to obtain a modulated signal. In the embodiments of the present invention, during the process of generating the modulated signal, no digital intermediate frequency modulation is required, so that all processing before the photoelectric conversion is performed on an optical domain, and the optical signal obtained through processing is transmitted through optical waveguide (such as optical fibers), which prevents the intermediate frequency cables from restricting high-speed transmission of the transmission device.

## BRIEF DESCRIPTION OF THE DRAWINGS

To make the technical solutions in the embodiments of the present invention or in the prior art clearer, the following outlines accompanying drawings involved in the description of the embodiments or the prior art. Apparently, the accompanying drawings outlined below are merely part of the embodiments of the present invention, and persons of ordinary skill in the art may derive other drawings from the accompanying drawings without creative efforts.

FIG. 1 is a schematic structural diagram of a microwave transmission device in the prior art;
FIG. 2 is a flowchart of a method for generating a modulated signal according to an embodiment of the present invention;
FIG. 3 is a schematic structural diagram of a transmission device according to an embodiment of the present invention;
FIG. 4A is a schematic structural diagram of a microwave transmission device in Embodiment 1;
FIG. 4B is a constellation diagram of each obtained signal in Embodiment 1;
FIG. 5A is a schematic structural diagram of a microwave transmission device in Embodiment 2;
FIG. 5B is a constellation diagram of each obtained signal in Embodiment 2; and
FIG. 6 is a schematic structural diagram of a microwave transmission device in Embodiment 3.

## DETAILED DESCRIPTION OF THE EMBODIMENTS

The following describes the technical solutions in the embodiments of the present invention clearly and thoroughly with reference to the accompanying drawings. Apparently, the described embodiments are merely part of rather than all of the embodiments of the present invention. All other embodiments, which may be derived by those of ordinary skill in the art from the embodiments of the present invention without creative efforts, shall fall within the scope of the present invention.
The technical solutions of the present invention are described below with reference to the accompanying drawings and embodiments.
An embodiment of the present invention provides a method for generating a modulated signal. As shown in FIG. 2, the method includes the following steps:

Step S1: Generate first monochromatic light and second monochromatic light between which a frequency difference exists.

Step S2: Modulate the first monochromatic light and the second monochromatic light respectively to obtain a first modulated optical signal and a second modulated optical signal.

In this step, the first monochromatic light may undergo phase modulation and/or amplitude modulation, and the second monochromatic light may also undergo phase modulation and/or amplitude modulation. Specifically, the first monochromatic light and the second monochromatic light are modulated respectively according to service data to be transmitted.

Step S3: Superimpose the first modulated optical signal and the second modulated optical signal to obtain a hybrid optical signal.

Step S4: Perform photoelectric conversion on the hybrid optical signal to obtain a modulated signal. In this step, specifically, the photoelectric conversion is performed on a difference-frequency signal in the hybrid optical signals to obtain a modulated signal, where the frequency of the difference-frequency signal is the frequency difference between the first monochromatic light and the second monochromatic light.

The following describes principles of the method for generating a modulated signal provided in the embodiment of the present invention.

The frequency of the first monochromatic light is f1, the frequency of the second monochromatic light is f2, and the frequency difference is $\Delta f=|f1-f2|$. The first monochromatic light is expressed as $E_{S1}(t)=E_1*\cos(\omega_1*t-k_1*x+\varphi_1)$, and the second monochromatic light is expressed as $E_{S2}(t)=E_2*\cos(\omega_2*t-k_2*x+\varphi_2)$, where $\omega_1=2\pi f1$, $\omega_2=2\pi f2$, $E_1$ is an electric field amplitude of the first monochromatic light, $E_2$ is an electric field amplitude of the second monochromatic light, $k_1$ is a wave vector of the first monochromatic light, $k_2$ is a wave vector of the second monochromatic light, $\varphi_1$ is an initial phase of the first monochromatic light, and $\varphi_2$ is an initial phase of the second monochromatic light.

After the first monochromatic light undergoes the amplitude modulation and/or the phase modulation, the first modulated optical signal is obtained, which is expressed as $E_{S1}'(t)=E_1(t)*\cos(\omega_1*t-k_1*x+\varphi_1(t))$, where $E_1(t)$ is an amplitude of the first modulated optical signal obtained after the amplitude of the first monochromatic light is modulated, and $\varphi_1(t)$ is a phase of the first modulated optical signal obtained after the phase of the first monochromatic light is modulated. It is appropriate that only the amplitude of the first monochromatic light is modulated, and, in this case, $\varphi_1(t)$ is a fixed value $\varphi_1$; or only the phase of the first monochromatic light is modulated, and, in this case, $E_1(t)$ is a fixed value $E_1$.

After the second monochromatic light undergoes the amplitude modulation and/or the phase modulation, the second modulated optical signal is obtained, which is expressed as $E_{S2}'(t)=E_2(t)*\cos(\omega_2*t-k_2*x+\varphi_2(t))$, where $E_2(t)$ is an amplitude of the second modulated optical signal obtained after the amplitude of the second monochromatic light is modulated, and $\varphi_2(t)$ is a phase of the second modulated optical signal obtained after the phase of the second monochromatic light is modulated. It is appropriate that only the amplitude of the second monochromatic light is modulated, and, in this case, $\varphi_2(t)$ is a fixed value $\varphi_2$; or only the phase of the second monochromatic light is modulated, and, in this case, $E_2(t)$ is a fixed value $E_2$.

The first modulated optical signal and the second modulated optical signal are superimposed to obtain a hybrid optical signal, which is expressed as $E_S(t)=E_{S1}'(t)+E_{S2}'(t)$.

When a photodetector performs photoelectric conversion on the foregoing hybrid optical signal, a photocurrent generated by an illumination on a photosensitive surface of the photodetector is in proportion to a light intensity (square of an electric field intensity), namely:

$$i=g*E_s^{2}(t)=g*\left\{[E_{s1}'(t)]^2+2*E_{s1}'(t)*E_{s2}'(t)+[E_{s2}'(t)]^2\right\}.$$

In the preceding formula, g is a photoelectric conversion coefficient of the photodetector, and

$2*E_{s1}'(t)*E_{s2}'(t)$ represents a sum-frequency signal whose frequency is f1+f2 and a difference-frequency signal whose frequency is |f1-f2|.

The frequency of a lightwave is generally greater than $10^{14}$ Hz. Therefore, the frequency of the first monochromatic light f1 and the frequency of the second monochromatic light f2 are both greater than $10^{14}$ Hz. However, the response frequency of the photodetector is generally less than or equal to 100 GHz. Therefore, the photodetector is unable to respond to the sum-frequency signal whose frequency is f1+f2, but may respond to the difference-frequency signal whose frequency is |f1-f2). For the sum-frequency signal, the photodetector is equivalent to a lowpass filter. Meanwhile, the photocurrent output by the photodetector is a mean value in a response time $\tau$. Therefore, the photocurrent output by the photodetector is:

$$\bar{i} = \frac{1}{\tau} \int_{\tau} idt = g * E_1(t) * E_2(t) \left\{ 1 + \cos\left[\Delta\omega\left(t - \frac{x}{c}\right) + \Delta\varphi\right] \right\}.$$

In the preceding formula, $\Delta\omega = 2\pi|f1-f2| = 2\pi\Delta f$, $\Delta\varphi = \varphi_1(t) - \varphi_2(t)$, and c is the light velocity in vacuum.

The photocurrent output by the photodetector represents the modulated signal. The expression of the photocurrent output by the photodetector may reveal that the phase of the modulated signal is actually a sum or difference of the phase of the first modulated optical signal and the phase of the second modulated optical signal, and the amplitude of the modulated signal is actually a product of the amplitude of the first modulated optical signal and the amplitude of the second modulated optical signal. It can also be known from the foregoing principles that, the modulated signal generated in the method provided in the embodiment of the present invention is not a direct result of modulating the carrier whose frequency is $\Delta f$, but is a result of equivalent modulating of the carrier whose frequency is $\Delta f$.

The method for generating a modulated signal in this embodiment of the present invention may further include: before the photoelectric conversion is performed on the hybrid optical signal, the hybrid optical signal obtained in step S3 is further modulated with respect to phase and/or amplitude so as to improve a capacity of information to be transmitted. Accordingly, step S4 is to perform the photoelectric conversion on the hybrid optical signal further modulated with respect to phase and/or amplitude.

When the method for generating a modulated signal provided in the embodiment of the present invention is applied to the E-BAND band in the microwave communication field, a value range of $\Delta f$, the frequency difference between the first monochromatic light and the second monochromatic light, in step S1 is 71-76 GHZ/81-86 GHZ. It may be understandable that, the application scope of the method for generating a modulated signal provided in this embodiment of the present invention is not limited to the E-BAND band in the microwave communication field. Further, the method is applicable to other microwave band in the microwave communication field, and, in this case, the frequency difference between the first monochromatic light and the second monochromatic light is located in the corresponding microwave band, and the modulated signal obtained in step S4 is a microwave modulated signal obtained by performing equivalent modulation on the microwave carrier of the corresponding frequency ($\Delta f$). Persons skilled in the art may also use the method for generating a modulated signal provided in the embodiment of the present invention in other communication fields in addition to the microwave communication field, to implement high-speed service data transmission.

The method for generating a modulated signal provided in the embodiment of the present invention may further include: amplifying the modulated signal obtained in step S4. If the method for generating a modulated signal provided in the embodiment of the present invention is specifically applied to microwave communication, the microwave modulated signal obtained in step S4 is amplified and then transmitted through the antenna.

In the embodiment of the present invention, two pieces of monochromatic light, between which a frequency difference exists, are modulated to obtain a first modulated optical signal and a second modulated optical signal, and the first modulated optical signal and the second modulated optical signal are superimposed to obtain a hybrid optical signal, and then the photoelectric conversion is performed on the hybrid optical signal to obtain a modulated signal. In the embodiment of the present invention, during the process of generating the modulated signal, no digital intermediate frequency modulation is required, so that all processing before the photoelectric conversion is performed on the optical domain, and the optical signal obtained through processing is transmitted through optical waveguide (such as optical fibers), which prevents the intermediate frequency cables from restricting high-speed transmission of the transmission device. Meanwhile, by using the method of generating a modulated signal provided in this embodiment of the present invention, when high-speed service data transmission is implemented, no DAC which is characterized by high sampling frequency is required. Specially, if the embodiment of the present invention is applied to the microwave communication field, the hybrid optical signal generated in the embodiment of the present invention may be transmitted to an ODU or a transmitter through optical fibers, and then undergoes the photoelectric conversion in the ODU or transmitter, which prevents intermediate frequency cables from restricting high-speed transmission and brings a prospect of wide application of the microwave transmission device.

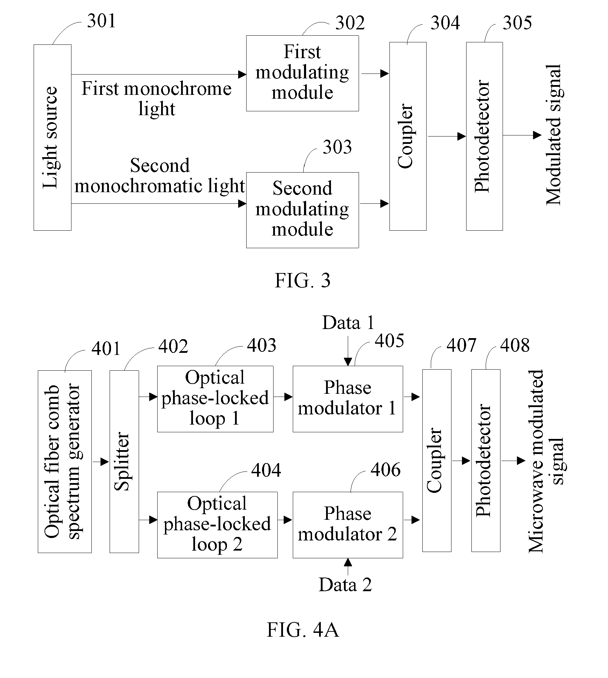

An embodiment of the present invention also provides a transmission device, and a structure thereof is shown in FIG. 3. The transmission device includes a light source (301), a first modulating module (302), a second modulating module (303), a coupler (304), and a photodetector (305).

The light source is configured to generate first monochromatic light and second monochromatic light between which a frequency difference exists. The light source may include two lasers, where the two lasers are configured to generate the first monochromatic light and the second monochromatic light of different frequencies respectively; or, the light source may specifically be an optical fiber comb spectrum generator, where the optical fiber comb spectrum generator is configured to generate the first monochromatic light and the second monochromatic light of different frequencies, and in this case, the first monochromatic light and the second monochromatic light are intermixed. If the light source is an optical fiber comb spectrum generator, the transmission device provided in the embodiment of the present invention further includes a first optical phase-locked loop and a second optical phase-locked loop, where the first optical phase-locked loop is configured to filter the intermixed first monochrome light and second monochrome light to extract the first monochrome light, and the second optical phase-locked loop is configured to filter the intermixed first monochrome light and second monochrome light to extract the second monochrome light.

The first modulating module is configured to modulate the first monochromatic light to obtain a first modulated optical signal, and the second modulating module is configured to modulate the second monochromatic light to obtain a second modulated optical signal. Specifically, according to the service data to be transmitted, the first modulating module modulates an amplitude and/or a phase of the first monochromatic light, and the second modulating module modulates an amplitude and/or a phase of the second monochromatic light.

The coupler is configured to superimpose the first modulated optical signal and the second modulated optical signal to obtain a hybrid optical signal.

The photodetector is configured to perform photoelectric conversion on the hybrid optical signal obtained by the coupler to obtain a modulated signal.

The transmission device in the embodiment of the present invention may further include: a third modulating module, configured to modulate, before the photodetector, an amplitude and/or a phase of the hybrid optical signal obtained by the coupler, so as to improve a capacity of information to be transmitted. Accordingly, the photodetector is specifically configured to perform the photoelectric conversion on the optical signal output by the third modulating module.

The transmission device provided in the embodiment of the present invention may further include: an amplifier, configured to amplify the modulated signal obtained by the photodetector.

Specifically, the transmission device provided in the embodiment of the present invention may be a microwave transmission device. Accordingly, the frequency difference between the first monochromatic light and the second monochromatic light that are generated by the light source is located in the microwave band, and the modulated signal obtained by the photodetector is a microwave modulated signal. It may be understandable that, same as the microwave transmission device in the prior art, the microwave transmission device in the embodiment of the present invention may also include a duplexer and an antenna. The amplified microwave modulated signal passes through the duplexer, and is emitted by the antenna.

In the process of generating the modulated signal, the transmission device provided in the embodiments of the present invention obtains the hybrid optical signal through relevant processing on the optical domain, and then the photodetector converts the hybrid optical signal into the modulated signal. No digital intermediate frequency modulation is required, so that all processing before the photoelectric conversion is performed on the optical domain, and the optical signal obtained through processing is transmitted through optical waveguide (such as optical fibers), which prevents the intermediate frequency cables from restricting high-speed transmission of the transmission device. If the transmission device in an embodiment of the present invention is a microwave transmission device, the hybrid optical signal generated on the optical domain may be transmitted into the ODU through optical fibers, and then the signal undergoes the photoelectric conversion in the ODU (if the photodetector of the microwave transmission device is located in the ODU in the embodiment of the present invention) or in a transmitter (if the photodetector of the microwave transmission device is located in the transmitter in the embodiment of the present invention), which prevents intermediate frequency cables from restricting high-speed transmission of the microwave transmission device. Meanwhile, by using the microwave transmission device provided in the embodiment of the present invention, when high-speed service data transmission is implemented, no DAC which is characterized by high sampling frequency is required, the implementation of the device is simplified, and the cost is reduced. It should be noted that the transmission device provided in the embodiment of the present invention is not limited to the microwave transmission device in the microwave communication field, but may also be transmission devices in other communication fields.

To make the embodiments of the present invention clearer, the method for generating a modulated signal and the transmission device in the present invention are described in detail below with reference to several embodiments in the microwave communication field, but the implementation of embodiments of the present invention is not limited to the following embodiments.

**Embodiment 1**

This embodiment provides a microwave transmission device, and a structure thereof is shown in FIG. 4A. The microwave transmission device includes: an optical fiber comb spectrum generator (401), a splitter (402), an optical phase-locked loop 1 (403), an optical phase-locked loop 2 (404), a phase modulator 1 (405), a phase modulator 2 (406), a coupler (407), and a photodetector (408).

The optical fiber comb spectrum generator generates intermixed first monochromatic light and second monochromatic light between which a frequency difference exists. When the microwave transmission device provided in this embodiment is applied to the E-BAND band, a value range of $\Delta f$, the frequency difference between the first monochromatic light and the second monochromatic light, is 71~76 GHZ/81~86 GHZ.

In the splitter, the intermixed first monochromatic light and second monochromatic light input by the optical fiber comb spectrum generator is split into two channels: one is input into the optical phase-locked loop 1 and the other is input into the optical phase-locked loop 2. The optical phase-locked loop 1 filters the intermixed first monochromatic light and second monochromatic light to extract the first monochromatic light, and inputs the first monochromatic light into the phase modulator 1. The optical phase-locked loop 2 filters the intermixed first monochromatic light and second monochromatic light to extract the second monochromatic light, and inputs the second monochromatic light into the phase modulator 2.

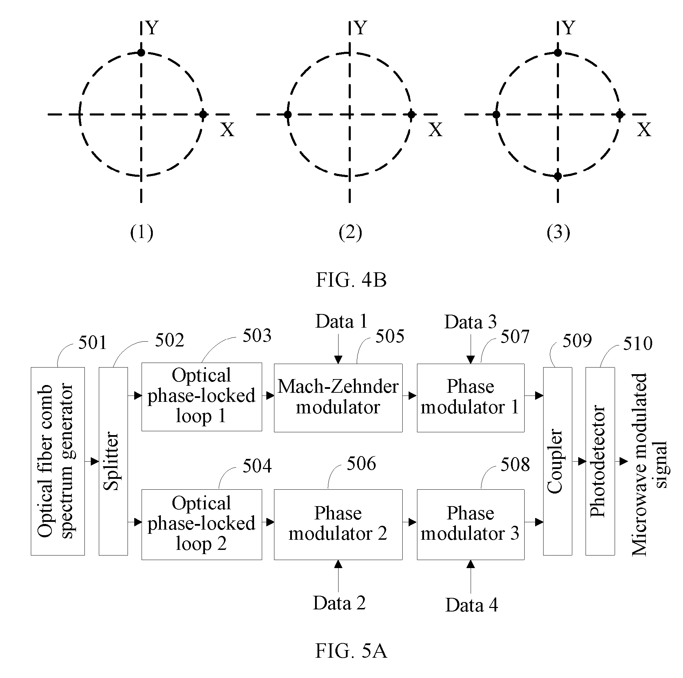

The service data to be transmitted is split into two channels: data 1 and data 2. The phase modulator 1 modulates the phase of the first monochromatic light according to the data 1, and the phase modulator 2 modulates the phase of the second monochromatic light according to the data 2. When the phase of the first monochromatic light is modulated, the phase of the first monochromatic light is modulated to 0 and $\pi/2$ respectively according to a low level and a high level of the data 1 to obtain the first modulated optical signals; when the phase of the second monochromatic light is modulated, the phase of the second monochromatic light is modulated to 0 and $\pi$ respectively according to a low level and a high level of the data 2 to obtain the second modulated optical signals. The first modulating module and the second modulating module described above are the phase modulator 1 (405) and the phase modulator 2 (406) respectively in this embodiment. FIG. 4B (1) is a constellation diagram of the obtained first modulated optical signals, and FIG. 4B (2) is a constellation diagram of the obtained second modulated optical signals.

The coupler superimposes the first modulated optical signals and the second modulated optical signals to obtain hybrid optical signals.

The photodetector performs photoelectric conversion on the foregoing hybrid optical signals, and specifically, performs the photoelectric conversion on the difference-frequency signal in the foregoing hybrid optical signals to obtain microwave modulated signals. The microwave modulated signals are equivalent to QPSK modulated signals obtained by performing QPSK (Quadrature Phase Shift Keying, quadrature phase shift keying) modulation on the carrier whose frequency is $\Delta f$. The four phase states of the QPSK modulated signals are 0, $\pi/2$, $\pi$, and $3\pi/2$. FIG. 4B (3) is a constellation diagram of the QPSK modulated signals.

The photodetector may be made of PIN diodes or APD (Avalanche Photo Diode, avalanche photo diode) diodes.

In this embodiment, the microwave transmission device modulates two pieces of monochromatic light on the optical domain to obtain a hybrid optical signal, where a frequency difference exists between the two pieces of monochromatic light; and then the microwave transmission device performs photoelectric conversion on the hybrid optical signal to obtain a microwave modulated signal (QPSK modulated signal). In this embodiment, when the microwave transmission device generates a microwave modulated signal, no digital intermediate frequency modulation is required, so that the hybrid optical signal generated in the optical domain may be transmitted to the ODU through optical fibers, and then the signal undergoes photoelectric conversion in the ODU (if the photodetector of the microwave transmission device is located in the ODU in the embodiment of the present invention) or in a transmitter (if the photodetector of the microwave transmission device is located in the transmitter in the embodiment of the present invention), which prevents intermediate frequency cables from restricting high-speed transmission of the microwave transmission device. Meanwhile, by using the microwave transmission device provided in the embodiment of the present invention, when high-speed service data transmission is implemented, no DAC which is characterized by high sampling frequency is required, the implementation of the device is simplified, and the cost is reduced.

**Embodiment 2**

This embodiment provides a microwave transmission device, and a structure thereof is shown in FIG. 5A. The microwave transmission device includes: an optical fiber comb spectrum generator (501), a splitter (502), an optical phase-locked loop 1 (503), an optical phase-locked loop 2 (504), a Mach-Zehnder modulator (505), a phase modulator 1 (507), a phase modulator 2 (506), a phase modulator 3 (508), a coupler (509), and a photodetector (510).

Compared with the microwave transmission device in Embodiment 1, the microwave transmission device in this embodiment differs in that, when performing modulation on the first monochromatic light, the Mach-Zehnder modulator and the phase modulator 1 are used to modulate the amplitude and the phase of the first monochromatic light, and when performing modulation on the second monochromatic light, the phase modulator 2 and the phase modulator 3 are used to modulate the phase of the second monochromatic light.

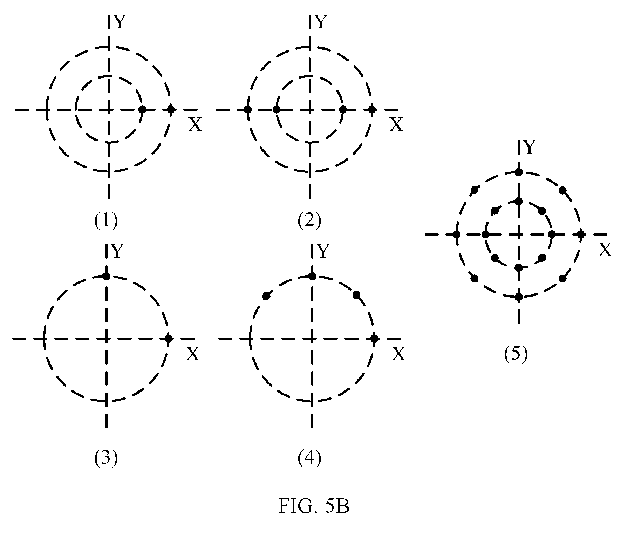

The service data to be transmitted is split into four channels: data 1, data 2, data 3, and data 4. The Mach-Zehnder modulator modulates the amplitude of the first monochromatic light to A (A>0) according to the high level of the data 1, and modulates the amplitude of the first monochromatic light to A/2 according to the low level of the data 1. FIG. 5B (1) is a constellation diagram of the signals output by the Mach-Zehnder modulator. The phase modulator 1 modulates, according to the high level of the data 3, the phase of the optical signal output by the Mach-Zehnder modulator to $\pi$, and modulates, according to the low level of the data 3, the phase of the optical signal output by the Mach-Zehnder modulator to 0. FIG. 5B (2) is a constellation diagram of the signals output by the phase modulator 1. The phase modulator 2 modulates, according to the high level of the data 2, the phase of the second monochromatic light to $\pi/2$, and modulates, according to the low level of the data 2, the phase of the second monochromatic light to 0. FIG. 5B (3) is a constellation diagram of the signals output by the phase modulator 2. The third phase modulator shifts, according to the high level of the data 4, the phase of the optical signal output by the phase modulator 2 for $\pi/4$, and shifts, according to the low level of the data 4, the phase of the optical signal output by the phase modulator 2 for 0. FIG. 5B (4) is a constellation diagram of the signals output by the phase modulator 3. The microwave modulated signals obtained by the photodetector are specifically star 16QAM (Quadarature Amplitude Modulation, quadarature amplitude modulation) modulated signals, and FIG. 5B (5) is a constellation diagram thereof. The first modulating module described above specifically includes the Mach-Zehnder modulator (505) and the phase modulator 1 (507) in this embodiment; and the second modulating module described above specifically includes the phase modulator 2 (506) and the phase modulator 3 (508) in this embodiment.

In this embodiment, the microwave transmission device modulates two pieces of monochromatic light on the optical domain to obtain a hybrid optical signal, where a frequency difference exists between the two pieces of monochromatic light; and then the microwave transmission device performs photoelectric conversion on the hybrid optical signal to obtain a microwave modulated signal (16QAM modulated signal). In this embodiment, when the microwave transmission device generates a microwave modulated signal, no digital intermediate frequency modulation is required, so that the hybrid optical signal generated in the optical domain may be transmitted to the ODU through optical fibers, and then the signal undergoes photoelectric conversion in the ODU (if the photodetector of the microwave transmission device is located in the ODU in the embodiment of the present invention) or in a transmitter (if the photodetector of the microwave transmission device is located in the transmitter in the embodiment of the present invention), which prevents intermediate frequency cables from restricting high-speed transmission of the microwave transmission device. Meanwhile, by using the microwave transmission device provided in the embodiment of the present invention, when high-speed service data transmission is implemented, no DAC which is characterized by high sampling frequency is required, the implementation of the device is simplified, and the cost is reduced.

**Embodiment 3**

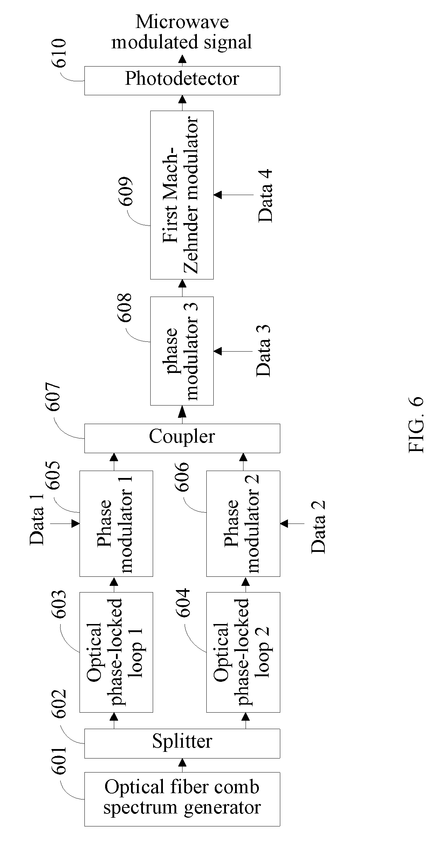

This embodiment provides a microwave transmission device, and a structure thereof is shown in FIG. 6. The microwave transmission device includes: an optical fiber comb spectrum generator (601), a splitter (602), an optical phase-locked loop 1 (603), an optical phase-locked loop 2 (604), a phase modulator 1 (605), a phase modulator 2 (606), a coupler (607), a phase modulator 3 (608), a Mach-Zehnder modulator (609), and a photodetector (610).

Compared with the microwave transmission device in Embodiment 1, the microwave transmission device in this embodiment differs in that the phase modulator 3 and the Mach-Zehnder modulator are used to modulate, before the photodetector, the amplitude and the phase of the hybrid optical signals obtained by the coupler.

The service data to be transmitted is split into four channels: data 1, data 2, data 3, and data 4. As regards how the phase modulator 1 modulates the phase of the first monochromatic light according to the data 1 and how the phase modulator 2 modulates the phase of the second monochromatic light according to the data 2, reference may be made to the related description in the first embodiment, which will not be described herein again. The following describes a working procedure of the phase modulator 3 and the Mach-Zehnder modulator.

The phase modulator 3 shifts, according to the high level of the data 3, the phase of the hybrid optical signal obtained by the coupler for $\pi/4$, and shifts, according to the low level of the data 3, the phase of the hybrid optical signal obtained by the coupler for 0. The Mach-Zehnder modulator modulates, according to the high level of the data 4, the amplitude of the optical signal output by the phase modulator 3 to A (A>0), and modulates, according to the low level of the data 4, the amplitude of the optical signal output by the phase modulator 3 to A/2. The photodetector performs photoelectric detection on the optical signals output by the Mach-Zehnder modulator to obtain electric signals, namely, microwave modulated signals. The microwave modulated signals are 16QAM modulated signals.

The first modulating module described above is specifically the phase modulator 1 (605) in this embodiment, the second modulating module described above is specifically the phase modulator 2 (606) in this embodiment, and the third modulating module described above includes the phase modulator 3 (608) and the Mach-Zehnder modulator (609) in this embodiment.

In this embodiment, the microwave transmission device modulates the two pieces of monochromatic light on the optical domain to obtain a hybrid optical signal, where a frequency difference exists between the two pieces of monochromatic light; and then the microwave transmission device modulates the amplitude and/or the phase of the hybrid optical signal, and performs photoelectric conversion on the modulated hybrid optical signal to obtain a microwave modulated signal. In this embodiment, when the microwave transmission device generates a microwave modulated signal, no digital intermediate frequency modulation is required, so that the hybrid optical signal generated in the optical domain may be transmitted to the ODU through optical fibers, and then the signal undergoes photoelectric conversion in the ODU (if the photodetector of the microwave transmission device is located in the ODU in the embodiment of the present invention) or in a transmitter (if the photodetector of the microwave transmission device is located in the transmitter in the embodiment of the present invention), which prevents intermediate frequency cables from restricting high-speed transmission of the microwave transmission device. Meanwhile, by using the microwave transmission device provided in the embodiment of the present invention, when high-speed service data transmission is implemented, no DAC which is characterized by high sampling frequency is required, the implementation of the device is simplified, and the cost is reduced.

It should be noted that the mode of modulating the first monochromatic light or the second monochromatic light according the service data is not limited to the modes described in Embodiment 1, the Embodiment 2, and Embodiment 3. For example, in Embodiment 1, the phase modulator 1 may modulate the phase of the first monochromatic light to $\pi/2$ according to the low level of the data 1, and modulate the phase of the first monochromatic light to 0 according to the high level of the data 1. According to the method provided in the embodiment of the present invention, the generated microwave modulated signals are not limited to the QPSK signals and 16QAM signals obtained in Embodiment 1, Embodiment 2, and Embodiment 3. For example, in Embodiment 1, if a phase modulator is added before the photodetector to modulate the hybrid optical signals output by the coupler, the microwave modulated signals obtained by the photodetector are 8PSK signals. During modulation, the amplitude modulation may occur before or after the phase modulation, which is not limited in the present application.

Persons of ordinary skill in the art should understand that all or part of the steps of the method in the embodiments of the present invention may be implemented by a program instructing relevant hardware. The program may be stored in a computer readable storage medium. When the program runs, the program executes steps of the method specified in any embodiment of the present invention. The storage medium may be any medium capable of storing program codes, such as a ROM, a RAM, a magnetic disk, or a CD-ROM.

Finally, it should be noted that the preceding embodiments are merely provided for describing the technical solutions of the present invention, but not intended to limit the present invention. Although the present invention is described in detail with reference to the foregoing embodiments, persons of ordinary skill in the art should understand that any modifications made to the technical solution described in the aforementioned embodiments or equivalent replacement made to part of technical features therein without departing from the spirit and scope of the technical solution of the embodiments of the present invention shall fall within the protection scope of the present invention.

**Claims**

1.   A method for generating a modulated signal, comprising:

generating first monochromatic light and second monochromatic light between which a frequency difference exists;
modulating the first monochromatic light and the second monochromatic light respectively to obtain a first modulated optical signal and a second modulated optical signal;
superimposing the first modulated optical signal and the second modulated optical signal to obtain a hybrid optical signal; and
performing photoelectric conversion on the hybrid optical signal to obtain a modulated signal.

2.   The method according to claim 1, wherein: the frequency difference is located in a microwave band, and accordingly, the modulated signal is specifically a microwave modulated signal.

3.   The method according to claim 1, wherein before performing the photoelectric conversion on the hybrid optical signal to obtain the modulated signal, the method further comprises:

modulating an amplitude and/or a phase of the hybrid optical signal.

4.   The method according to any one of claims 1 to 3, wherein:

the performing the photoelectric conversion on the hybrid optical signal to obtain the modulated signal comprises:

performing photoelectric conversion on a difference-frequency signal in the hybrid optical signal to obtain the modulated signal; a frequency of the difference-frequency signal is the frequency difference.

5.   The method according to claim 4, wherein:

the modulating the first monochromatic light and the second monochromatic light respectively to obtain the first modulated optical signal and the second modulated optical signal comprises:

modulating an amplitude and/or a phase of the first monochromatic light to obtain the first modulated optical signal, and modulating an amplitude and/or a phase of the second monochromatic light to obtain the second modulated optical signal.

6. A transmission device, comprising:

a light source, configured to generate first monochromatic light and second monochromatic light between which a frequency difference exists;
a first modulating module, configured to modulate the first monochromatic light to obtain a first modulated optical signal;
a second modulating module, configured to modulate the second monochromatic light to obtain a second modulated optical signal;
a coupler, configured to superimpose the first modulated optical signal and the second modulated optical signal to obtain a hybrid optical signal; and
a photodetector, configured to perform photoelectric conversion on the hybrid optical signal to obtain a modulated signal.

7. The device according to claim 6, wherein the transmission device is a microwave transmission device; and accordingly,
the frequency difference is located in a microwave band, and the modulated signal is a microwave modulated signal.

8. The device according to claim 6, wherein the light source is an optical fiber comb spectrum generator, configured to generate the intermixed first monochromatic light and second monochromatic light, and accordingly,
the device further comprises: a first optical phase-locked loop, configured to filter the intermixed first monochromatic light and second monochromatic light to obtain the first monochromatic light, and input the first monochromatic light into the first modulating module; and a second optical phase-locked loop, configured to filter the intermixed first monochromatic light and second monochromatic light to obtain the second monochromatic light, and input the second monochromatic light into the second modulating module.

9. The device according to any one of claims 6 to 8, wherein the device further comprises:

a third modulating module, configured to modulate an amplitude and/or a phase of the hybrid optical signal before the photoelectric conversion is performed on the hybrid optical signal.

10. The device according to any one of claims 6 to 8, further comprising:

an amplifier, configured to amplify the modulated signal.

Radio frequency processing module

Service data

Modulator/demodulator

| Digital-to-analog converter | Up-converter | Amplifier |

| Analog-to-digital converter | Down-converter | Amplifier |

Duplexer

Antenna

FIG. 1

Generate first monochromatic light and second monochromatic light between which a frequency difference exists — S1

Modulate the first monochromatic light and the second monochromatic light respectively to obtain a first modulated optical signal and a second modulated optical signal — S2

Superimpose the first modulated optical signal and the second modulated optical signal to obtain a hybrid optical signal — S3

Perform photoelectric conversion on the hybrid optical signal to obtain a modulated signal — S4

FIG. 2

301

Light source

First monochrome light

Second monochromatic light

302
First modulating module

303
Second modulating module

304
Coupler

305
Photodetector

Modulated signal

FIG. 3

Data 1

401
Optical fiber comb spectrum generator

402
Splitter

403
Optical phase-locked loop 1

404
Optical phase-locked loop 2

405
Phase modulator 1

406
Phase modulator 2

407
Coupler

408
Photodetector

Microwave modulated signal

Data 2

FIG. 4A

(1)             (2)             (3)

FIG. 4B

FIG. 5A

FIG. 5B

Microwave
modulated signal

610 — Photodetector

609 — First Mach-Zehnder modulator ← Data 4

608 — phase modulator 3 ← Data 3

607 — Coupler

605 — Phase modulator 1 ← Data 1

606 — Phase modulator 2 ← Data 2

603 — Optical phase-locked loop 1

604 — Optical phase-locked loop 2

602 — Splitter

601 — Optical fiber comb spectrum generator

FIG. 6

# INTERNATIONAL SEARCH REPORT

International application No.

PCT/CN2010/076432

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)

IPC: H04L, H04B, H04Q, H04W

Documentation searched other than minimum documentation to the extent that such documents are included in the fields searched

Electronic data base consulted during the international search (name of data base and, where practicable, search terms used)

WPI, EPODOC, CNPAT, CNKI, IEEE: modulate, modulation, generate, monochromatic, single, mode, frequency, light, optical, different, difference, overlap, add, mix, photoelectric, opto-electric, convert, change

### C. DOCUMENTS CONSIDERED TO BE RELEVANT

| Category* | Citation of document, with indication, where appropriate, of the relevant passages | Relevant to claim |
|---|---|---|
| P, X | CN101667983A (HUAWEI TECHNOLOGIES CO., LTD.) 10 Mar. 2010 (10.03.2010) Page 4 line 1-page 13 line 3 of the description; figures 1-3; claims 1-10 | 1-10 |
| X | CN1934806A (NATIONAL INSTITUTE OF INFORMATION AND COMMUNICATIONS TECHNOLOGY, INDEPENDENT ADMINISTRATIVE AGENCY et al.) 21 Mar. 2007 (21.03.2007) page 1 line 6- page 3 line 9, page 5 line 15- page 7 line 2 of the description; figures 1 and 10 | 1, 6, 10 |
| A | WO2007/080950A1 (MATSUSHITA ELECTRIC IND. CO., LTD.) 19 Jul. 2007 (19.07.2007) the whole document | 1-10 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 Sep. 2010 (26.09.2010) | **02 Dec. 2010 (02.12.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | FENG,Yuxue Telephone No. (86-10)62413412 |

Form PCT/ISA /210 (second sheet) (July 2009)

<div align="center">

**INTERNATIONAL SEARCH REPORT**
Information on patent family members

</div>

| | | International application No. |
|---|---|---|
| | | PCT/CN2010/076432 |

| Patent Documents referred in the Report | Publication Date | Patent Family | Publication Date |
|---|---|---|---|
| CN101667983A | 10.03.2010 | None | |
| CN1934806A | 21.03.2007 | JP2005244655A | 08.09.2005 |
| | | WO2005/083915A1 | 09.09.2005 |
| | | KR20070022669A | 27.02.2007 |
| | | US2007/206957A1 | 06.09.2007 |
| WO2007/080950A1 | 19.07.2007 | JP2007215165A | 23.08.2007 |
| | | US2009/009259A1 | 08.01.2009 |
| | | CN101371469A | 18.02.2009 |

Form PCT/ISA /210 (patent family annex) (July 2009)

## INTERNATIONAL SEARCH REPORT

| International application No. |
| --- |
| PCT/CN2010/076432 |

Continuation of : CLASSIFICATION OF SUBJECT MATTER

H04L 27/00 (2006.01) i

H04B 10/12 (2006.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910190319